(19) Europäisches Patentamt
European Patent Office
Office européen des brevets

(11) EP 0 603 678 B1

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(51) Int. Cl.$^6$: **A22C 13/00**, B32B 27/34, B65D 65/40, B32B 27/08

(21) Anmeldenummer: **93119955.8**

(22) Anmeldetag: **10.12.1993**

(54) **Mehrschichtige Kunststoffhülle mit zwei nebeneinanderliegenden Schichten aus aliphatischem Polyamid**

Multilayered polymeric tubular casing with two adjacent aliphatic polyamide layers

Enveloppes tubulairs multicouches en résine polymérique ayant deux couches adjacentes en polyamide aliphatiques

(84) Benannte Vertragsstaaten:
**AT BE DE DK ES FR GB IT NL**

(30) Priorität: **23.12.1992 DE 4243800**

(43) Veröffentlichungstag der Anmeldung:
**29.06.1994 Patentblatt 1994/26**

(73) Patentinhaber:
**WOLFF WALSRODE AKTIENGESELLSCHAFT
D-29699 Walsrode (DE)**

(72) Erfinder:
• **Hennig-Cardinal von Widdern, Michael, Dipl.-Ing.
D-29664 Walsrode (DE)**
• **Reiners, Ulrich, Dr.
D-29643 Neuenkirchen (DE)**

(74) Vertreter: **Braun, Rolf, Dr. et al
Bayer AG
Konzernbereich RP
Patente und Lizenzen
51368 Leverkusen (DE)**

(56) Entgegenhaltungen:
**EP-A- 0 132 565        EP-A- 0 225 164
EP-A- 0 277 839        EP-A- 0 467 039
EP-A- 0 530 538        EP-A- 0 530 539**

**Beschreibung**

Die Erfindung betrifft eine coextrudierte, biaxial verstreckte, nahtlose Wursthülle, insbesondere für die Umhüllung von insbesondere Brühwurst und Kochwurst.

Einhergehend mit den Forderungen der Folienanwender nach Hüllen mit hoher Barrierewirkung gegenüber Wasserdampf- und Sauerstoffpermeation bei reduziertem Materialeinsatz, zeichnet sich in den vergangenen Jahren auch bei Schlauchfolien mit kleinen Durchmessern von 20 bis 150 mm der Trend ab, Materialeigenschaften mittels der Coextrusion unterschiedlicher Polymere anforderungsgerecht zu kombinieren. Dabei setzen sich zunehmend biaxial verstreckte Polyamid/Polyolefin-Verbunde mit Wandstärken zwischen 35 und 70 μm durch.

Dem Polyamid fällt bei derartigen Folienstrukturen bereits bei der biaxialen Verstreckung mittels der bekannten "double bubble"-Technik die Aufgabe zu, die Queraufweitung des Schlauches infolge Molekülorientierung und dehnungsinduzierter Kristallisation bei Querreckgraden zwischen 2,8 und 4 abzuschließen. Bei der zielgerechten Anwendung der Schlauchfolie z.B. als Wursthülle dominieren die Festigkeitseigenschaften des verstreckten Polyamides gegenüber denen der nicht vollständig ausgereckten Polyolefine.

Der Modifizierung derartiger PA/PE-Folienverbunde durch Zumischung von anorganischen Füllstoffadditiven, insbesondere in die innen- und/oder außenliegende(n) PA-Schicht(en), sind hinsichtlich Mengenanteil und Korngrößen enge Grenzen gesetzt, da bei Überschreiten additivspezifischer Mengenanteile die Polyamid-Polymermatrix derart geschwächt wird, daß Störungen beim produktionsbestimmenden Reckprozeß auftreten.

Andererseits führte diese Mengenbegrenzung bei der Füllstoffzumischung in der Vergangenheit häufig zu Hüllen mit unzureichender Wirksamkeit der Mischungskomponenten derart, daß die Optimierung von bestimmten Folieneigenschaften nur unzureichend und unter Inkaufnahme von nachteiligen anderen Eigenschaften und/oder unerwünschten Produktionsschwierigkeiten erreicht werden konnte.

So führt zum Beispiel die Zugabe eines erhöhten Pigmentanteils in eine innen- bzw. außenliegende Polyamidschicht, mit dem Ziel die Farbintensität zu erhöhen, zu einer Vielzahl von produktionstechnischen Schwierigkeiten, die sich für den Anwender in verminderter Produktqualität und für den Hersteller in reduzierten Anlagestandzeiten bemerkbar macht:

Pigmentkörner, die sich während des Reckprozeßes an der Oberfläche des Polymerschlauches befinden, führen zu Mikrorissen an der Oberfläche. Diese Mikrorisse sind häufig Ursache für das Platzen der Reckblase, da sie Ausgangsort für unkontrollierbare Rißfortpflanzung sind.

Insbesondere bei höherem Pigmentkorngehalt in einer der innen- bzw. außenliegenden Polymerschichten kommt es zu Pigmentkornablagerungen an der Düsenlippe des Extrusionswerkzeuges. Diese Ablagerungen wiederum führen zu Dickenungleichmäßigkeiten über dem Umfang des zu verstreckenden Primärschlauches und damit einerseits zu erhöhter Streifigkeit des Folienendproduktes und andererseits zu produktionstechnischen Schwierigkeiten im Bereich des biaxialen Reckprozesses, derart, daß die dickenreduzierten Bereiche eine veränderte Verformungscharakteristik aufweisen und häufig zum Zerplatzen der Reckblase führen.

Besonders nachteilig wirken sich erhöhte Pigmentkorngehalte in außenliegenden Polymerschichten aus, wenn daraus Additivablagerungen an den Transport- und Abquetschwalzen resultieren, was eine nicht zulässige Verschmutzung der Lebensmittelfolien produzierenden Anlage mit sich bringt.

Befindet sich die hochpigmentierte Schicht auf der Innenseite des Folienschlauches, besteht außerdem die Gefahr, daß beim direkten Kontakt der Folie mit dem Füllgut Pigmente auf die Lebensmittel übergehen.

Aufgabe der vorliegenden Erfindung war es daher, die Möglichkeit zu schaffen, eine Hülle mit erhöhtem Anteil an Füllstoffkomponenten in einer Polyamid(PA)-Schicht zur Verfügung zu stellen, ohne Nachteile hinsichtlich des Produktionsprozesses, insbesondere der biaxialen Verstreckung, und der resultierenden qualitativen Folienmerkmale hinnehmen zu müssen.

Die japanische Patentanmeldung J 1 014 032 beschreibt eine biaxial verstreckte coextrudierte Schlauchfolie für die Anwendung als Brüh- und Kochwursthülle. Während die äußere, dem Füllgut angewandte Polymerschicht aus aliphatischem Polyamid besteht, wird die innenliegende, dem Füllgut zugewandte Schicht, aus einem Ethylen-Acrylsäure-Copolymeren gebildet. Die zwischen der inneren und äußeren Lage angeordnete mittlere Schicht aus PE- bzw. PP-Copolymerem dient der Haftvermittlung der umgebenden Schichten. Dieses Folienkonzept bewährt sich in der praktischen Anwendung mit zufriedenstellenden Barriere- und Festigkeitseigenschaften.

Bei diesem Folientyp hat es sich durchgesetzt, daß nur die Polyolefinschicht als Farbpigmentträger fungiert, da eine Schwächung der PA-Schicht durch Zugabe einer ausreichenden Menge an Farbpigmenten den Reckprozeß schwer kontrollierbar machen würde.

Aufgrund der geringen Polyolefinschichtstärke von ca. 15 bis 20 cm, die zur Verfügung steht, mit Farbpigmenten angereichert zu werden, gelingt es nicht, eine eingefärbte Hülle mit zufriedenstellender Farbdeckkraft und Farbwirkung zu erzeugen.

Teilweise versucht man die unzureichende Farbdeckkraft und Farbwirkung der eingefärbten Hüllen durch vollflächigen Farbdruck zu kaschieren. Dieser zusätzliche Konfektionierungsschritt ist jedoch sehr aufwendig und steigert in unannehmbarem Maß die Herstellungskosten.

Die deutsche Patentanmeldung DE 40 17 046 beschreibt eine coextrudierte biaxial verstreckte Schlauchfolie mit einer innenliegenden, dem Füllgut zugewandten Schicht aus aliphatischem und/oder teilaromatischem (Co-)Polyamid, einer Kernschicht aus aliphatischem Copolyamid und einer Kernschicht aus Polyolefin und haftvermittelnder Komponente.

Auch dieses Folienkonzept erlaubt es nicht, der bzw. den Polyamidschicht(en) anorganische Mischungszusätze in gewünschtem Maß zuzusetzen, ohne die Polyamidträgerschichten derart zu schwächen, daß der produktionsrelevante Reckprozeß gestört wird.

Eine weitere Aufgabe der nachfolgend beschriebenen Erfindung war es demzufolge, eine Folienstruktur mit hohem Anteil an Folieneigenschaften-modifizierenden Mischungszusätzen in einer der Polyamidschichten zu finden, ohne Nachteile hinsichtlich des Produktionsprozesses, insbesondere der biaxialen Verstreckung, und der resultierenden qualitativen Folienmerkmale hinnehmen zu müssen.

Gegenstand der vorliegenden Erfindung ist eine mindestens 4-schichtig coextrudierte, biaxial verstreckte, nahtlose Wursthülle mit einer innenliegenden und einer außenliegenden Polyamidschicht, einer durch die Polyamidrandschichten eingeschlossenen Schicht mit wasserdampfsperrender Funktion, dadurch gekennzeichnet, daß mindestens eine weitere Schicht aus überwiegend aliphatischem Polyamid vorliegt, das durch Zugabe eines anorganischen Mischungszusatzes modifiziert ist, und diese mit mindestens einer der innen- bzw außenliegenden Polyamidschichten direkt verbunden ist.

Durch Anbindungen einer Schicht aus aliphatischem, mit anorganischen Mischungszusätzen modifiziertem Polyamid an mindestens eine der innen- bzw. außenliegenden Polyamidrandschichten kann eine Vielzahl an durch den Mischungszusatz bedingten, produktionstechnischen Schwierigkeiten und qualitativen Nachteilen vermieden werden.

Überraschenderweise kann unter Beibehaltung der angestrebten Gesamtfolienstärke der Polyamid-modifizierende Mischungszusatz deutlich erhöht werden, ohne auf der anderen Seite produktionstechnische bzw. qualitätsrelevante Nachteile hinnehmen zu müssen. Damit wird der Folienproduzent in die Lage versetzt, dem Anwender maßgeschneiderte Folienqualitäten durch höhere Zugaben an modifizierten Mischungskomponenten zur Verfügung zu stellen. Folientechnisch besonders bedeutsam sind die daraus resultierenden Möglichkeiten, die Farbpigmentkonzentration zu erhöhen und dem Polyamid höhere Anteile an weichmachenden und Barriereeigenschaften verbessernden organischen Polymermodifikatoren einzumischen.

So besteht bei der erfindungsgemäßen Folienstruktur die Möglichkeit, sowohl die Wasserdampfbarriereeigenschaften als auch die Folienelastizität durch Zumischung von hohen Gewichtsanteilen an teilverträglichen Ethylen- oder Propylen- basierenden Copolymeren in die eingekapselte Polyamidschicht deutlich zu verbessern. Die Zumischung von Ethylen-Vinylalkoholcopolymeren in die betreffende Polyamid-Schicht führt zu einer deutlichen Reduzierung der Sauerstoffpermeation der erfindungsgemäßen Folie.

Desweiteren kann die Opazität von eingefärbten Folien durch Farbpigmente mit größerem Pigmentkorndurchmessern deutlich erhöht werden. Bisher führten größere Pigmentkorngeometrien in der bzw. den Polyamidschichten mehrschichtiger Schlauchfolien häufig zum Zerplatzen der nach dem "double bubble-Verfahren" hergestellten Folien. Neben der Verbesserung der Opazität wird insbesondere bei Einfärbungen, die Metallfarben betreffen, der metallische Effekt verstärkt.

Insbesondere die Zugabe von Pigmentkörnern in das aliphatische Polyamid bewirkt eine Zunahme der Kristallinität des Polyamidgefüges beim zu verstreckenden Primärschlauch. Die erhöhte Kristallinität wiederum kann den Reckprozeß des Schlauches stören. In einer bevorzugten Ausführung besteht aus diesem Grund die pigmentierte Polyamidschicht im wesentlichen aus aliphatischem Copolyamid. Die kristallisationshemmende Copolymerstruktur reduziert die Kristallinität und erleichert somit den Reckprozeß.

Zum Einfärben der Polyamide werden vorzugsweise anorganische Pigmente mit einer Temperaturstabilität größer 280°C eingesetzt. Während im Normalfall die Partikelgröße der Farbpigmente ca. 1 $\mu$m beträgt, können Einfärbungen mit Metalleffekten den Einsatz von Partikelabmessungen bis zu 25 $\mu$m erfordern.

Die Einfärbung wird bevorzugt durch Zugabe von Farbmasterbatches in das Polyamid vorgenommen.

Beispiele für geeignete anorganische Pigmente in Masterbatches sind:

Titandioxyd, Ruß, Zinkeisengelb, Eisenoxyd u.s.w.

Die Herstellung der biaxialen verstreckten Schlauchfolien erfolgt vorzugsweise nach dem bekannten "double bubble"- beziehungsweise nach dem "injected bubble"-Verfahren, bei denen zunächst das schlauchförmige Extrudat durch intensive Kühlung in den Festkörperzustand überführt wird.

Im weiteren Verlauf des Herstellungsprozesses wird der so erhaltene relativ dickwandige Primärschlauch (300 bis 500 $\mu$m) auf eine zur Festkörperverstreckung geeignete Temperatur wiedererwärmt. Die Wiedererwärmung kann in einer oder mehreren Schritten zum Beispiel mittels heißer Luft, Heißdampf, temperiertem Wasserbad oder Infrarot-Strahlern erfolgen.

Die biaxiale Verstreckung wird durch ein gasförmiges oder flüssiges Druckpolster oder durch einen Festkörper erreicht. Zur Steigerung des Längsreckgrades kann die Kraft des abziehenden Walzenpaares gezielt erhöht werden.

Nach der biaxialen Verstreckung wird in einer bevorzugten Herstellungstechnik eine Thermofixierstrecke angeschlossen, um die Dimensionsstabilität der Schlauchfolie in einem oder in mehreren Schritten durch Temperaturbehandlung zu verbessern. Auch hierbei bieten sich als Wärmeträger heiße Luft, Heißdampf, temperierte Fluide und/oder Infrarot-Strahler an. Die Thermofixierung in Gegenwart von Wasser beziehungsweise Wasserdampf bewirkt zudem infolge von temperaturbedingt rascher Wasseraufnahme der Polyamide ein Erweichen der Polyamidschichten und somit eine verbesserte Flexibilität der Folie.

Das Wickeln der biaxial gereckten Schlauchfolie wird bebevorzugt mit changierenden Wicklern durchgeführt, um durch das seitliche Verlegen der Folie ein Aufbauen der Liegekanten zu verhindern. In einer besonders bevorzugten Herstellungstechnik wird der Folienschlauch zudem kontinuierlich um seine Längsachse gedreht, damit unvermeidliche Foliendickstellen nicht übereinandergelegt werden und somit sogenannte "Kolbenringe" auf der Rolle vermieden werden.

Der Gegenstand der Erfindung soll anhand der folgenden Beispiele erläutert werden.

Beispiele

Die im nachfolgenden aufgeführten Beispiele wurden an einer 5-Schicht-Schlauchfoliencoextrusionslinie realisiert. Das Plastifizieren und Homogenisieren der thermoplatischen Polymere erfolgte entsprechend der Polymerschichtenanzahl durch 3 bis 5 separate Extruder. Die biaxiale Verstreckung des coextrudierten Primärschlauches wurde nach dem allgemein bekannten "double bubble"-Verfahren vorgenommen.

Die Beurteilung der nachfolgend aufgeführten Versuchsmusterproduktionen erfolgte einerseits nach Kriterien, die den Produktionsablauf beschreiben (Kriterien A), andererseits nach Kriterien, die die Qualität des Endproduktes charakterisieren (Kriterien B).

Als Kriterien (A) sind in die Tabelle 1 aufgenommen worden:

- Häufigkeit des Platzens der Reckblase während einer Versuchsproduktion von 6000 m biaxial gereckten Folienschlauches
- Durchmesserabweichung der Folienreckblase während der Versuchsproduktion

Als Kriterien (B) sind in die Tabelle 2 aufgenommen worden:

- Streifigkeit der Farbpigmente enthaltenden Folienschläuche
- Wasserdampfdurchlässigkeit der Folienmuster
- Sauerstoffdurchlässigkeit der Folienmuster

Bei den anschließenden Beispielen werden für die in den coextrudierten Folienschichten eingesetzten Polymere folgende Abkürzungen verwendet:

A1. : Copolyamid 6.66 (Ultramid C 35 von BASF)
A2. : Polyamid 6 (Durethan B 38 F von Bayer)
B1. : Propylen-basierendes Copolymer mit aufgepfropften Maleinsäureanhydridgruppen (Admer QF 551 E von Mitsui; PO-HV = polyolefinischer Haftvermittler)
B2. : LLDPolyethylen-basierendes Copolymer mit aufgepfropften Maleinsäureanhydridgruppen (Bynel E 409 von PU PONT)
XX1. : Ethylen-Vinylalkohol-Copolymer (Eval EP-F 101 BZ von Kuraray)
Gold-MB: Polyamid 6-basierendes Farbmasterbatch (Farbe: gold) enthaltend 20 Gew.-% goldfarbene Pigmente mit einer korngrößenverteilung von 5 - 25 $\mu$m.

[Die Zahl hinter dem Punkt, z.B. A2.2, betrifft die Nummerierung der Schichten mit gleichem Basispolymer, z.B. 2. Schicht aus Durethan B 38 F, mit der Zählweise von innen nach außen].

Beispiel 1
[PA6.66/PA6.66 (20 % Gold-MB) / PO-HV/PA6.66]

Aus dem Coextrusionswerkzeug tritt ein 4-schichtig coextrudierter schmelzeflüssiger Primärschlauch mit dem Aufbau (von innen nach außen).

A1.1 / A1.2 + Add. / B1.1 / A1.3

4

aus und wird sowohl von außen als auch von innen mittels auf 10°C temperiertem Wasser abgekühlt und in die Festkörperform überführt.

Die Schicht A1.2 erhält neben dem Basispolymer Utramid C 35 zusätzlich 20 Gew.-% Polyamid-basierendes Gold-Masterbatch (MB).

Die Polymerschicht B1.1 übernimmt neben den haftvermittelnden Funktion auch Aufgabe der Wasserdampfbarriere.

Nach der Abkühlung weist der Primärschlauch einen Durchmesser von 16 mm und folgende Schichtdickenverteilung (von innen nach außen) auf:

A1.1=100 μm / A1.2=160 μm / B1.1=80 μm / A1.3=100 μm

Anschließend wird der Primärschlauch in einem auf 125°C temperierten Luftstrom wiedererwärmt und durch Einschluß einer Druckluftbase zwischen zwei luftdicht abschließenden Walzenpaaren um das 3,2-fache sowohl in Quer- als auch Längsrichtung biaxial verstreckt.

Wiederum zwischen zwei dicht abschließenden Walzenpaaren durchläuft der biaxial verstreckte Schlauch eine auf 165°C temperierte Wärmebehandlungszone, wobei ein innen eingebrachtes Druckvolumenpolster weitgehend eine thermisch initiierte Durchmesserreduzierung verhindert.

Die so erhaltene Folie weist einen Durchmesser von 50 mm und eine Gesamtfolienstärke von 42 μm auf.

In den Tabellen 1 und 2 sind gemäß oben definierter Vorgehensweise vergleichende Beurteilungen hinsichtlich des Verarbeitungsverhaltens des Folienschlauches bei der Produktion und charakterisierender Qualitätseigenschaften aufgeführt.

Vergleichsbeispiel 1
[PA6.66 (12 % Gold-MB)/PO-HV/PA6.66]

Nach gleichem Procedere, wie in Beispiel 1 beschrieben, wird ein 3-schichtig coextrudierter Primärschlauch mit dem Aufbau (von innen nach außen)

A1.1 + Add. / B1.1 / A1.2

und der Schichtdickenverteilung

A1.1=260 μm / B1.1=80 μm / A1.2=100 μm

hergestellt.

Die Schicht A1.1 enthält neben dem Basispolymer PA6.66 zusätzlich 12 % Gold-Masterbatch.

Im Gegensatz zu Beispiel 1 liegt die Farbpigment tragende Schicht nun auf der Innenseite des Schlauches und die Pigmentkonzentration in der Farbschicht ist von 20 Gew.-% auf 12 Gew.-% reduziert worden.

Der Primärschlauch wird bei gleichen Verstreck- und Thermofixierbedingungen, wie in Beispiel 1, weiterverarbeitet.

Die Zusammenfassung der vergleichbaren Beurteilung ist den Tabellen 1 und 2 zu entnehmen.

Beispiel 2
[PA6.66/PA6.66 (20 % Gold-MB)/PO-HV/PA6.66 (20 % Gold-MB) /PA6.66]

Nach gleichem Verfahren wie in Beispiel 1 wird ein 5-schichtig coextrudierter Primärschlauch mit nachfolgend beschriebenem Aufbau (von innen nach außen) hergestellt:

A1.1/A1.2 + Add. / B1.1 /A1.3 + Add. / A1.4

Die Schichten A1.2 und A1.3 bestehen in Anlehnung an Beispiel 1 wiederum aus einem Copolyamid 6.66 und enthalten 20 Gew.-% Polyamid basierendes Gold-Masterbatch.

Nach der Abkühlung weist der Primärschlauch einen Durchmesser von 16 mm und folgende Schichtdickenverteilung auf:

A1.1=60 μm / A1.2=120 μm / B1.1=80 μm / A1.3=120 μm / A1.4=60 μm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 50 mm und eine Gesamtstärke von 43 μm auf.

Die Zusammenfassung der vergleichenden Beurteilung ist den Tabellen 1 und 2 zu entnehmen.

Vergleichsbeispiel 2 [Pa6.66 (13 Gew.-% Gold-MB)/PO-HV/PA6.66 (13 Gew.-% Gold-MB)]

Es wird ein Primärschlauch mit dem Aufbau:

A1.1+ Add. / B1.1 / A1.2 + Add.

und der Schichtdickenverteilung

A1.1=180 μm / B1.1=80 μm / A1.2=180 μm

hergestellt.

Im Gegensatz zu Beispiel 2 liegen die Farbpigment tragenden Schichten nun auf der Innen- und Außenseite des Schlauches und die Pigmentkonzentration in den Farbträgerschichten ist von 20 Gew.-% auf 13 Gew.-% reduziert worden.

Der Primärschlauch wird bei gleichen Verstreck- und Thermofixierbedingungen, wie in den Beispielen 1 und 2, weiterverarbeitet.

Die Zusammenfassung der vergleichenden Beurteilung ist den Tabellen 1 und 2 zu entnehmen.

Beispiel 4 [PA6/PA6.66 (30 % COPO + 20 % Gold-MB) / PO-HV / EVOH / PA6]

Wie in den vorstehenden Beispielen beschrieben wird ein 5-schichtig coextrudierter Primärschlauch mit nachfolgend genannten Aufbau (von innen nach außen) hergestellt:

A2.1 / A1.1 + Add. /B2.1 / XX1.1 / A2.2

Neben den Basispolymeren für die 4-Schichten wurden der Schicht A1.1 30 Gew.-% Surlyn 1650 und 20 Gew.-% Gold-Masterbatch zugemischt.

Nach der Abkühlung weist der Primärschlauch einen Durchmesser von 15 mm und folgende Schichtdickenverteilung auf:

A2.1=60 μm / A1.1=200 μm / B2.1=40 μm / XX1.1=30 μm / A2.2=100 μm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 47 mm und eine Gesamtstärke von 42 μm auf.

Die Zusammenfassung der vergleichenden Beurteilung ist den Tabellen 1 und 2 zu entnehmen.

Beispiel 5 [PA6 / PA6.66 (30 % COPO + 20 % Gold-MB) / PO-HV / PA6.66 (30 % COPO + 20 % Gold-MB) / PA6]

Es wird ein 5-schichtig coextrudierter Primärschlauch mit dem Aufbau

A2.1 / A1.1 + Add. / B1.1 / A1.2 + Add. /A2.1

und der Schichtdickenverteilung

A2.1=60 μm / A1.1=140 μm /B1.1=40 μm / A1.2=140 μm / A2.1=60 μm

hergestellt, biaxal verstreckt und thermofixiert.

Die Schichten A1.1 und A1.2 enthalten neben dem Basispolymer PA6.66 zusätzlich 30 Gew.-% Surlyn 1650 und 20 Gew.-% Gold-Masterbatch.

Die Zusammenfassung der vergleichenden Beurteilung ist den Tabellen 1 und 2 zu entnehmen.

Vergleichsbeispiel 5
[PA6.66 (20 % COPO + 10 % Gold-MB) / B1.1 / PA6.66 (20 COP + 10 % Gold-MB)]

Es wird ein 3-schichtig coextrudierter Primärschlauch mit dem Aufbau

A1.1 + Add. / B1.1 / A1.2 + Add.

und der Schichtdickenverteilung

A1.1=200 µm / B1.1=40 µm / A1.2=200 µm

hergestellt, biaxial verstreckt und thermofixiert.

Die Schichten A1.1 und A1.2 enthalten neben dem Basis-polymer PA6.66 zusätzlich 20 Gew.-% Surlyn 1650 und 10 Gew.-% Gold-Masterbatch.

Im Gegensatz zum erfindungsgemäßen Beispiel 5 liegen die Polyamidschichten, die durch Farbpigment und Ethylen-Copolymerisat modifiziert worden sind, auf der Innenseite des Schlauches.

Die Zusammenfassung der vergleichenden Beurteilung ist den Tabellen 1 und 2 zu entnehmen.

T a b e l l e   1 beinhaltet die Darstellung produktionsrelevanter Beurteilungskriterien während der Versuchsproduktion:

I.      Häufigkeit des Platzens der Reckblase während einer Versuchsproduktion von 6000 m biaxial gereckten Kunststoffschlauches

II.     Durchmesserabweichung der Folienreckblase während der Versuchsproduktion

| Beispiele (B) / Vergleich (V) Nummerierung | Anzahl der Platzer (I). | Durchmesserabweichung (II.) (mm) |
|---|---|---|
| B 1 | 0 | +/- 0,4 |
| V 1 | 3 | +/- 0,7 |
| B 2 | 1 | +/- 0,5 |
| V 2 | 3 | +/- 0,7 |
| B 3 | 1 | +/- 0,6 |
| B 4 | 1 | +/- 0,6 |
| V 4 | 5 | +/- 1,0 |

Tabelle 2 beinhaltet die Darstellung qualitätsrelevanter Beurteilungskriterien für die Folienmuster:

I. Streifigkeit der Farbpigment enthaltenden Folienschläuche - visuelle Beurteilung nach folgendem Bewertungsschema:

    1 = Streifigkeit nicht erkennbar

    2 = Streifigkeit kaum erkennbar

    3 = Streifigkeit mittelmäßig erkennbar

    4 = Streifigkeit deutlich erkennbar

II. Wasserdampfdurchlässigkeit der Folienmuster
    $[g/m^2 \ d]$ (bei $23^0 C$; 85 % r.F.)

III. Sauerstoffdurchlässigkeit der Folienmuster
    $[ml/m^2 \ bar \ d]$ (bei $23^0 C$; 75 % r.F.)

| Beispiele (B) / Vergleich (V) Nummerierung | Streifigkeit (I.) | Wasserdampfdurchlässigkeit (II.) | Sauerstoffdurchlässigkeit (III.) |
|---|---|---|---|
| B 1 | 1 | 5 | 30 |
| V 1 | 4 | 5 | 36 |
| B 2 | 0 | 0 | 34 |
| V 2 | 3 | 0 | 40 |
| V 3 | - | 3 | 4 |
| V 3a | - | 5 | 4 |
| B 4 | 1 | 8 | 3 |
| B 5 | 0 | 3 | 35 |
| V 5 | 2 | 4 | 40 |

**Patentansprüche**

1. Mindestens 4-schichtig coextrudierte, biaxial verstreckte naht lose Wursthülle mit einer innenliegenden und einer außenliegenden Schicht, die im wesentlichen aus aliphatischem Polyamid bestehen, und mindestens einer durch die innen- und außenliegenden Polyamidschichten eingeschlossenen Schicht mit wasserdampfsperrender Funktion, die aus Polyethylen oder Polypropylen und/oder Ethylen-und/oder Propylen-basierenden Copolymeren aufgebaut ist, dadurch gekennzeichnet, daß mindestens eine weitere Schicht aus überwiegend aliphatischem Polyamid vorliegt, das durch Zugabe eines anorganischen Mischungszusatzes modifiziert ist, und diese mit mindestens einer der innen- bzw. außenliegenden Polyamidschichten direkt verbunden ist.

2.  Schlauchfolie nach Anspruch 1, dadurch gekennzeichnet, daß die mit anorganischem Mischungszusatz modifizierte Polyamidschicht im wesentlichen aus aliphatischem Polyamid, PA6, PA11, PA12, PA66, PA6.66, PA6.8, PA6.9, PA6.10, PA6.11, PA6.12 oder einer Mischung der genannten Polyamide besteht.

3.  Schlauchfolie nach den Ansprüchen 1 oder 2, dadurch gekennzeichnet, daß der anorganische Mischungszusatz in der Polyamidschicht im wesentlichen aus Farbpigmenten besteht.

4.  Schlauchfolie nach wenigstens einem der vorstehenden Ansprüche, dadurch gekennzeichnet, daß sowohl direkt an der innenliegenden als auch an der außenliegenden Polyamidschicht der Schlauchfolie durch anorganischen Mischungszusatz modifizierte Polyamidschichten angebunden sind.

5.  Schlauchfolie nach wenigstens einem der vorstehenden Ansprüche, dadurch gekennzeichnet, daß die durch anorganischen Mischungszusatz modifizierten Polyamidschichten, die an den innen- und außenliegenden Polyamidschichten angebunden sind, Mischungszusätze unterschiedlicher Konsistenz und in unterschiedlichen Konzentrationen enthalten.

6.  Schlauchfolie nach wenigstens einem der vorstehenden Ansprüche dadurch gekennzeichnet, daß die durch die innen- und außenliegenden Polyamidschichten eingeschlossene, Wasserdampfpermeation behindernde Schicht aus säurehaltigem, Ethylen- oder Propylen-basierendem Copolymer besteht.

7.  Schlauchfolie nach Anspruch 6, dadurch gekennzeichnet, daß das säurehaltige Ethylen- oder Propylenbasierende Copolymer mit Polyethylen oder Polypropylen und/oder Ethylen- oder Propylen-basierenden Copolymeren abgemischt ist.

8.  Schlauchfolie nach wenigstens einem der vorstehenden Ansprüche dadurch gekennzeichnet, daß die innen- und außenliegenden Polymerschicht im wesentlichen aus aliphatischen Polyamiden PA6, PA11, PA12, PA66, PA6.66, PA6,8, PA6,9, PA6.10, PA6.11, PA6.12 oder einer Mischung der genannten Polyamide bestehen.

**Claims**

1.  An at least 4-layered, coextruded, biaxially stretched seamless sausage skin with an internally and externally located layer, which consist substantially of aliphatic polyamide, and at least one layer with a water vapour blocking function, enclosed by the internally and externally located polyamide layers, which is constructed from polyethylene or polypropylene and/or copolymers based on ethylene and/or propylene, characterised in that at least one further layer made from largely aliphatic polyamide is present, which is modified by the addition of an inorganic additive, and this is directly bonded to at least one of the internally or externally located polyamide layers.

2.  Tubular film according to Claim 1, characterised in that the polyamide layer modified with an inorganic additive substantially consists of aliphatic polyamide PA6, PA11, PA12, PA66, PA6.66, PA6.8, PA6.9, PA6.10, PA6.11, PA6.12 or a mixture of the polyamides mentioned.

3.  Tubular film according to Claims 1 or 2, characterised in that the inorganic additive in the polyamide layer substantially consists of coloured pigments.

4.  Tubular film according to at least one of the previous Claims, characterised in that polyamide layers modified with an inorganic additive are anchored directly to both the internally located and to the externally located polyamide layers of the tubular film.

5.  Tubular film according to at least one of the preSous Claims, characterised in that the polyamide layers modified by an inorganic additive, and anchored to the internally and externally located polyamide layers, contain additives of different consistency and in different concentrations.

6.  Tubular film according to at least one of the preceding Claims, characterised in that the layer which prevents the permeation of water vapour, enclosed by the internally and externally located polyamide layers, consists of an acid-containing copolymer based on ethylene or propylene.

7.  Tubular film according to Claim 6, characterised in that the acid-containing copolymer based on ethylene or propylene is admixed with polyethylene or polypropylene and/or copolymers based on ethylene or propylene.

8.  Tubular film according to at least one of the preceding Claims, characterised in that the internally and externally located polymer layers substantially consist of aliphatic polyamides PA6, PA11, PA12, PA66, PA6.66, PA6.8, PA6.9, PA6.10, PA6.11, PA6.12 or a mixture of the polyamides mentioned.

**Revendications**

1.  Enveloppe de saucisse sans joint à orientation biaxiale, coextrudée en au moins quatre couches, comportant une couche interne et une couche externe qui sont constituées principalement de polyamide aliphatique et au moins une couche à fonction d'arrêt de la vapeur d'eau, incluse entre les couches interne et externe en polyamide, qui est constituée de polyéthylène ou de polypropylène et/ou de copolymères à base d'éthylène et/ou de propylène, caractérisée par la présence d'au moins une autre couche en polyamide principalement aliphatique, qui est modifiée par l'adjonction d'un additif inorganique en mélange et cette couche est en liaison directe avec une au moins des couches interne et externe en polyamide.

2.  Feuille tubulaire suivant la revendication 1, caractérisée en ce que la couche de polyamide modifiée par un additif inorganique en mélange est principalement constituée de polyamide aliphatique, PA6, PA11, PA12, PA66, PA6.66, PA6.8, PA6.9, PA6.10, PA6.11, PA6.12 ou d'un mélange des polyamides mentionnés.

3.  Feuille tubulaire suivant les revendications 1 ou 2, caractérisée en ce que l'additif inorganique en mélange contenu dans la couche en polyamide est principalement constitué de pigments de couleur.

4.  Feuille tubulaire suivant l'une au moins des revendications précédentes, caractérisée en ce que des couches en polyamide modifiées par un additif inorganique en mélange sont liées tant directement à la couche interne en polyamide qu'à la couche externe en polyamide de la feuille tubulaire.

5.  Feuille tubulaire suivant l'une au moins des revendications précédentes, caractérisée en ce que les couches en polyamide modifiées par un additif inorganique en mélange, qui sont liées aux couches interne et externe en polyamide, contiennent des additifs en mélange de consistance variée et à diverses concentrations.

6.  Feuille tubulaire suivant l'une au moins des revendications précédentes, caractérisée en ce que la couche imperméable à la vapeur d'eau, enfermée par les couches interne et externe en polyamide, est constituée de copolymère à base d'éthylène ou de propylène contenant un acide.

7.  Feuille tubulaire suivant la revendication 6, caractérisée en ce que le copolymère à base d'éthylène ou de propylène contenant un acide est mélangé à du polyéthylène ou à du polypropylène et/ou à des copolymères à base d'éthylène ou de propylène.

8.  Feuille tubulaire suivant l'une au moins des revendications précédentes, caractérisée en ce que la couche interne et la couche externe de polymère sont principalement constituées de polyamides aliphatiques PA6, PA11, PA12, PA66, PA6.66, PA6.8, PA6.9, PA6.10, PA6.11, PA6.12 ou d'un mélange des polyamides mentionnés.